# EUROPÄISCHE PATENTSCHRIFT

(11) **EP 1 254 041 B1**
(45) Veröffentlichungstag und Bekanntmachung des Hinweises auf die Patenterteilung: **19.05.2004**
(21) Anmeldenummer: 01911619.3
(22) Anmeldetag: 07.02.2001
(51) Int. Cl.: B60R 22/34, B60R 22/46

(54) **SICHERHEITSGURTAUFROLLER MIT ROTATIONSDÄMPFER**
SAFETY BELT RETRACTOR COMPRISING A ROTATION DAMPER
ENROULEUR DE CEINTURE DE SECURITE MUNI D'UN AMORTISSEUR DE ROTATION

(30) Priorität: 09.02.2000 DE 10005636
(43) Veröffentlichungstag der Anmeldung: 06.11.2002
(73) Patentinhaber: AUTOLIV DEVELOPMENT AB, 447 83 Vargarda (SE)
(72) Erfinder: JUCHEM, Alois, 82272 Moorenweis (DE); LUCHT, Andreas, 25358 Horst (DE); WITTENBERG, Geert, Helge, 22848 Norderstedt (DE)
(74) Vertreter: Müller, Karl-Ernst, Dr., Dipl.-Ing.
(86) Internationale Anmeldenummer: PCT/EP2001/001316
(87) Internationale Veröffentlichungsnummer: WO 2001/058728

(56) Entgegenhaltungen:
- GB-A- 2 330 338
- US-A- 5 794 878
- PATENT ABSTRACTS OF JAPAN vol. 2000, no. 03, 30. März 2000 (2000-03-30) & JP 11 334531 A (TAKATA KK), 7. Dezember 1999 (1999-12-07)

## Beschreibung

Die Erfindung betrifft einen Sicherheitsgurtaufroller als Sicherheitssystem in Kraftfahrzeugen mit einer in einem U-förmigen Gehäuse gelagerten Gurtwelle als Träger des darauf aufgewickelten Gurtbandes, und mit einem auf die Gurtwelle einwirkenden Rotationsdämpfer als Kraftbegrenzungselement, wobei der Rotationsdämpfer aus einem mit einem hochviskosen Medium gefüllten zylindrischen Gehäuse mit wenigstens einer darin feststehend angeordneten Scheibe besteht und in dem Gehäuse parallel zur Scheibe ein mit der in ihrer Drehung zu dämpfenden Gurtwelle fest verbundener Scheibenkolben angeordnet ist.

Ein Sicherheitsgurtaufroller mit den vorgenannten Merkmalen ist in der GB 2 330 338 A beschrieben. Soweit in dem mit einem hochviskosen Medium gefüllten Gehäuse eine Abfolge von feststehenden scheibenartigen Flügeln und von in den dazwischen bestehenden Zwischenräumen angeordneten, mit der Gurtwelle verbundenen Scheibenkolben beschrieben ist, erfolgt die Kraftbegrenzung allein aufgrund der durch die Relativdrehung der flächigen Scheiben gegenüber den feststehenden, ebenfalls flächigen Flügeln hervorgerufenen Scherkräfte. Mit der bekannten Ausbildung ist der Nachteil verbunden, dass allein das flächenhafte Zerreiben des hochviskosen Mediums zwischen den beweglichen und den feststehenden Scheiben die benötigte Kraftbegrenzung nicht sicherstellen kann. Aus der US 5 794 878 A ist weiterhin ein Rotationsdämpfer bekannt, bei welchem in einem mit einem viskosen Medium gefüllten Gehäuse ein mit der Gurtwelle verbundener propellerartig mit drei in die Drehrichtung gebogenen Flügeln ausgebildeter Kolben angeordnet ist, wobei die drei Flügel eine einheitliche Umfangslinie ausbilden. Auch diese Ausführung eines Rotationsdämpfers kann keine ausreichende Kraftbegrenzung herbeiführen.

Der Erfindung liegt daher die Aufgabe zugrunde, bei einem Rotationsdämpfer für einen Sicherheitsgurtaufroller mit den eingangs genannten Merkmalen die Kraftbegrenzung zu verbessern bzw. zu verstärken.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass die in dem Gehäuse feststehend angeordnete Scheibe eine Lochscheibe ist und der Scheibenkolben mit einem radial abstehenden, bei Drehung des Scheibenkolbens umlaufenden Kolbenflügel versehen ist. Mit der Erfindung ist der Vorteil verbunden, dass bei der Verdrehung des Scheibenkolbens zu der Lochscheibe keine Verdrängung bzw. ein Überströmen des Mediums erfolgt, sondern dass die zwischen den beiden zueinander verdrehbaren Scheiben (Lochscheibe und Scheibenkolben) entstehenden Scherkräfte zur Kraftbegrenzung genutzt werden.

Als ein Ausführungsbeispiel für den Einsatz eines erfindungsgemäßen Rotationsdämpfers bei einem Sicherheitsgurtaufroller richtet sich die Erfindung zunächst darauf, daß das Gehäuse seitlich an das Gehäuse des Sicherheitsgurtaufrollers angeflanscht und der Scheibenkolben mit der Gurtwelle verbunden ist. Soweit ein derartiger Sicherheitsgurtaufroller bereits eine Kraftbegrenzungseinrichtung in Form eines mit der Gurtwelle verbundenen Torsionsstabes aufweist, kann vorgesehen sein, daß der Scheibenkolben als zusätzliches Kraftbegrenzungselement mit dem Torsionsstab verbunden ist.

Alternativ kann vorgesehen sein, den Rotationsdämpfer in den zu diesem Zweck hohl ausgebildeten Wellenkörper der Gurtwelle zu integrieren, wobei in dem Wellenkörper ein im Sperrfall des Sicherheitsgurtaufrollers blockierter Wellenkern als Träger der darauf formschlüssig angeordneten Lochscheiben angeordnet und die Scheibenkolben über eine Formschlußverbindung an den Wellenkörper angeschlossen sind.

Nach Ausführungsbeispielen der Erfindung kann vorgesehen sein, daß eine Mehrzahl von Scheibenkolben und Lochscheiben in wechselnder Anordnung vorgesehen und/oder zwischen Scheibenkolben und Lochscheiben jeweils eine Distanzscheibe angeordnet ist.

Vorzugsweise findet als hochviskoses Medium Silikon Anwendung. Zur generellen Erhöhung des Kraftniveaus des Kraftbegrenzers und zur Kompensation eines möglichen Kraftabfalls bei höheren Temperaturen kann vorgesehen sein, daß das Silikon bereits vor dem Wirksamwerden der Kraftbegrenzung unter erhöhtem Druck steht. Dieser kann dadurch herbeigeführt werden, daß das Silikon in das Gehäuse mit entsprechend hohem Druck eingefüllt wird.

In der Zeichnung sind Ausführungsbeispiele der Erfindung wiedergegeben, welche nachstehend beschrieben sind. Es zeigen:
- Fig. 1: einen Sicherheitsgurtaufroller in einer perspektivischen Gesamtansicht,
- Fig. 2: eine Ausführung des Rotationsdämpfers im zusammengebauten, in einen Sicherheitsgurtaufroller einbaubereiten Zustand im Schnitt,
- Fig. 3: den Gegenstand der Figur 2 in einer anderen Darstellungsweise,
- Fig. 4: eine weitere Ausführungsform des in eine Gurtwelle integrierten Rotationsdämpfers in einer teils geschnittenen Ansicht.

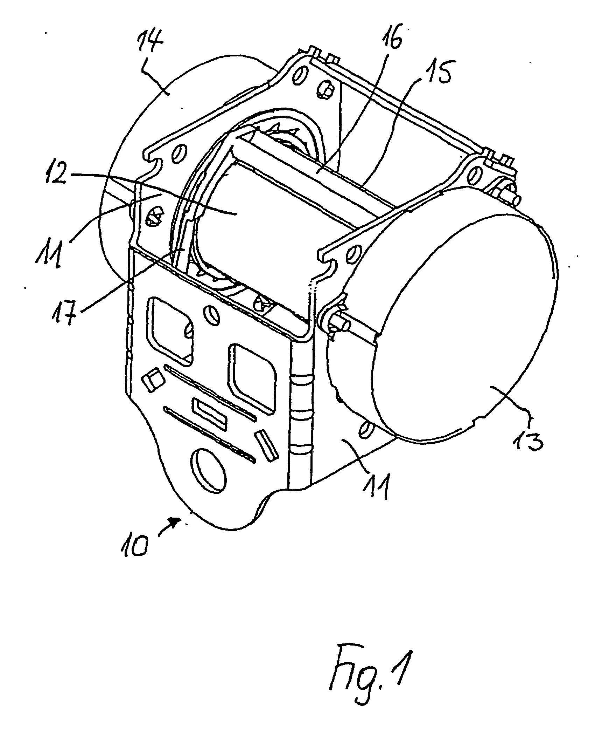

Der in Figur 1 in seiner Gesamtheit dargestellte Sicherheitsgurtaufroller 10 hat ein U-förmig ausgebildetes Gurtaufrollergehäuse mit zugeordneten U-Schenkeln 11; in den beiden U-Schenkeln 11 ist eine Gurtwelle 12 drehbar gelagert, auf der ein nicht dargestelltes Gurtband aufwickelbar bzw. davon abwickelbar ist. Hierzu ist das eine Ende der Gurtwelle 12 von einem Steuer- und Blockiersystem beaufschlagt, welches durch eine Systemkappe 14 abgedeckt ist, während das andere Ende der Gurtwelle 12 von einer unter einer Federkappe 13 liegenden Gurtaufwickelfeder beaufschlagt ist. An den U-Schenkeln 11 ist an entsprechenden Armen 17 eine Gurtführung 15 schwenkbar gelagert, die einen Führungsschlitz 16 zur Einfassung des hierdurch geführten, nicht dargestellten Gurtbandes aufweist, so daß das Gurtband verzerrungsfrei auf die Gurtwelle 12 aufwickelbar bzw. von dieser abwickelbar ist. Insoweit zählt ein derartiger Aufbau eines Sicherheitsgurtaufrollers 10 zum Stand der Technik und es zeigt die Figur 1 noch keine Merkmale der Erfindung.

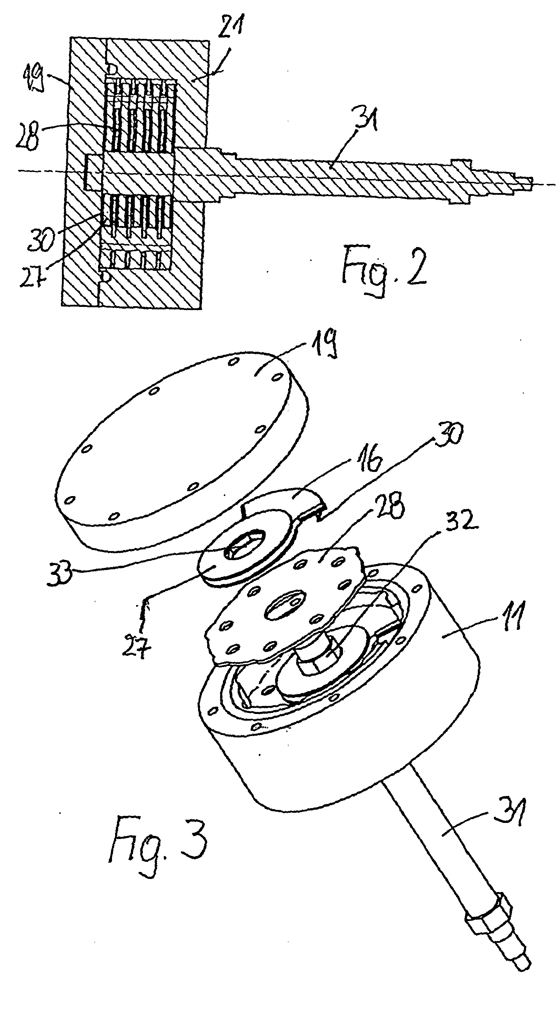

Bei den in den Figuren 2 bis 4 im einzelnen dargestellten Ausführungsbeispielen der Anbindung eines erfindungsgemäßen Rotationsdämpfers an die Gurtwelle des Sicherheitsgurtaufrollers ist in einem mit insbesondere Silikon als hochviskosem Medium gefüllten Gehäuse 21 jeweils eine feststehende Lochscheibe 28 angeordnet, gegenüber welcher ein mit einem radial abstehenden Kolbenflügel 16 versehener Scheibenkolben 27 zugeordnet ist. Da der Scheibenkolben 27 mit dem in seiner Drehung zu dämpfenden Bauteil fest verbunden ist, entstehen bei den Ausführungsbeispielen gemäß Figuren 2 bis 4 zwischen den zueinander verdrehbaren Scheibenkolben 27 und den zugeordneten Lochscheiben 28 entsprechende Scherkräfte, da das zwischen den Scheiben stehende hochviskose Medium, vorzugsweise Silikon, durch den Scheibenkolben 27 eine Druckbeaufschlagung erfährt und gegebenenfalls komprimiert und zwischen den Scheibenflächen zerrieben wird. Die in den Lochscheiben 28 angeordneten Löcher dienen dem Druckausgleich zwischen den einzelnen Scheiben und ermöglichen eine gleichmäßige Befüllung des Gehäuses mit Silikon. Wie sich aus Figur 3 ergibt, sind vorzugsweise mehrere Scheibenkolben 27 und Lochscheiben 28 im Wechsel zueinander angeordnet.

Im einzelnen zeigen die Figuren 2 und 3 ein Ausführungsbeispiel, bei dem das zylindrische Gehäuse 21 auf der Außenseite des Gurtaufrollergehäuses angeschlossen und mit der Welle des Gurtaufrollers oder einem zugeordneten Torsionsstab gekoppelt sind. Dabei sind die jeweiligen Lochscheiben 28 undrehbar in dem zylindrischen Gehäuse 21 festgelegt, während die Scheibenkolben 27 mit einer profilierten Lageröffnung 33 auf einem formentsprechend profilierten Abschnitt 32 eines Wellenkerns 31 der Gurtwelle 12 aufgesetzt sind, so daß bei Drehung der Gurtwelle 12 und damit der Drehung des Wellenkerns 31 als Bestandteil der Gurtwelle 12 die Rotation der Gurtwelle 12 gedämpft wird.

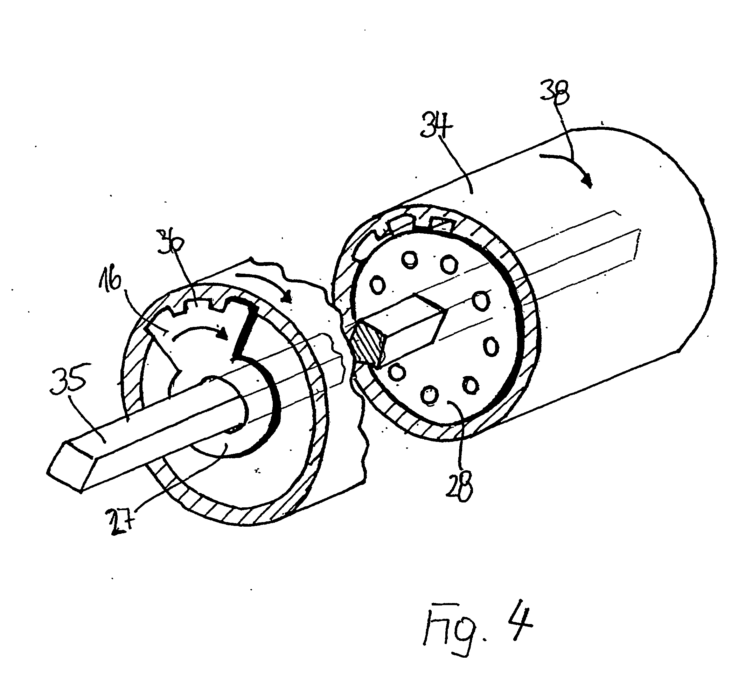

Dagegen zeigt das in Figur 4 dargestellte Ausführungsbeispiel die Integration des im einzelnen aus den Figuren 2 und 3 ersichtlichen Rotationsdämpfers in das Innere der Gurtwelle, die einen hohl ausgebildeten Wellenkörper 34 aufweist. Durch den Wellenkörper 34 verläuft der bei diesem Ausführungsbeispiel mit 35 bezeichnete Wellenkern, der an das Blockiersystem des betreffenden Sicherheitsgurtaufrollers angeschlossen ist. Die Lochscheiben 28 sind dabei auf dem profilierten Wellenkern 35 angeordnet, während die Scheibenkolben 27 auf dem Wellenkern 35 drehbar, über Formschlußgestaltungen 36 aber formschlüssig mit dem Wellenkörper 34 verbunden sind. Kommt es bei dem Blockierungszustand des Gurtaufrollers zu einer Festlegung des Wellenkerns 35, und dreht sich der Wellenkörper 34 aufgrund der Zugbelastung des Gurtbandes in Richtung des Pfeils 38 weiter, so drehen sich aufgrund der formschlüssigen Verbindung 36 zwischen Scheibenkolben 27 und Wellenkörper 34 die Scheibenkolben 27 mit, während die Lochscheiben 28 stillstehen. Hiermit kommt es zur Erzeugung der gewünschten Scherkräfte.

## Patentansprüche

1. Sicherheitsgurtaufroller (10) als Sicherheitssystem in Kraftfahrzeugen mit einer in einem U-förmigen Gehäuse (11) gelagerten Gurtwelle (12) als Träger des darauf aufgewickelten Gurtbandes, und mit einem auf die Gurtwelle (12) einwirkenden Rotationsdämpfer als Kraftbegrenzungselement, wobei der Rotationsdämpfer aus einem mit einem hochviskosen Medium gefüllten zylindrischen Gehäuse (21) mit wenigstens einer darin feststehend angeordneten Scheibe (28) besteht und in dem Gehäuse (21) parallel zur Scheibe (28) ein mit der in ihrer Drehung zu dämpfenden Gurtwelle (12,31,34) fest verbundener Scheibenkolben (27) angeordnet ist, **dadurch gekennzeichnet, dass** die in dem Gehäuse (21) feststehend angeordnete Scheibe eine Lochscheibe (28) ist und der Scheibenkolben (27) mit einem radial abstehenden, bei Drehung des Scheibenkolbens (27) umlaufenden Kolbenflügel (16) versehen ist.

2. Sicherheitsgurtaufroller nach Anspruch 1, **dadurch gekennzeichnet, dass** das Gehäuse (21) seitlich an das Gehäuse (11) des Sicherheitsgurtaufrollers (10) angeflanscht und der Scheibenkolben (27) mit der Gurtwelle (31,34) verbunden ist.

3. Sicherheitsgurtaufroller nach Anspruch 2 mit einem als Kraftbegrenzungseinrichtung arbeitenden, an die Gurtwelle angeschlossenen Torsionsstab, bei welchem der Scheibenkolben (27) mit dem Torsionsstab verbunden ist.

4. Sicherheitsgurtaufroller nach Anspruch 1, **dadurch gekennzeichnet, daß** das zylindrische Gehäuse von dem Wellenkörper (34) der Gurtwelle gebildet ist und Lochscheiben (28) und Scheibenkolben (27) in dem Wellenkörper (34) angeordnet sind, wobei in dem Wellenkörper (34) ein im Sperrfall des Sicherheitsgurtaufrollers blockierter Wellenkern (35) als Träger der darauf formschlüssig angeordneten Lochscheiben vorgesehen ist und die Scheibenkolben (27) über eine Formschlußverbindung (36) an dem Wellenkörper (34) angeschlossen sind.

5. Sicherheitsgurtaufroller nach einem der Ansprüche 1 bis 4, **dadurch gekennzeichnet, daß** eine Mehrzahl von Scheibenkolben (27) und Lochscheiben (28) in wechselnder Abfolge in dem Gehäuse (21, 34) des Rotationsdämpfers angeordnet ist.

6. Sicherheitsgurtaufroller nach einem der Ansprüche 1 bis 5, **dadurch gekennzeichnet, daß** zwischen Scheibenkolben (27) und Lochscheibe (28) jeweils ein Distanzelement (30) angeordnet ist.

7. Sicherheitsgurtaufroller nach einem der Ansprüche 1 bis 6, **dadurch gekennzeichnet, daß** das Gehäuse (21, 34) mit Silikon als hochviskosem Medium gefüllt ist.

8. Sicherheitsgurtaufroller nach Anspruch 7, **dadurch gekennzeichnet, daß** das in das Gehäuse (21, 34) eingefüllte Silikon bereits vor dem Wirksamwerden der Kraftbegrenzung unter einem erhöhten Druck steht.

## Claims

1. Safety belt retractor (10) as a safety belt system in motor vehicles, with, as a carrier of the belt strap wound thereon, a belt shaft (12) that is mounted in a U-shaped housing (11), and with, as a force limiting element, a rotation dampener that acts upon the belt shaft (12) whereas the rotation dampener comprises a cylindrical housing (21) that is filled with a highly viscous medium and that has at least one disk (28) fixedly disposed therein, and in the housing (21) parallel to the disk (28) there is disposed a disk piston (27) that is fixedly connected with the belt shaft (12, 31, 34), the rotation of which is to be dampened, **characterised in that** the disc fixedly disposed within the housing (21) is a apertured disc (28) and that the disc piston (27) has a radially extending piston wing (16) that rotates upon rotation of the disk piston (27).

2. Safety belt retractor according to claim 1, **characterized in that** the housing (21) is flanged laterally on the housing (11) of the safety belt retractor (10), and the disk piston (27) is connected with the belt shaft (31, 34)

3. Safety belt retractor according to claim 2 with a torsion rod that operates as a force limiting device and is connected to the belt shaft, whereby the disk piston (27) is connected with the torsion rod.

4. Safety belt retractor according to claim 1, **characterized in that** the cylindrical housing is formed by the shaft body (34) of the belt shaft, and apertured disks (28) and disk pistons (27) are disposed in the shaft body (34), whereby provided in the shaft body (34) is a shaft core (35) as a carrier of the apertured disks interlockingly disposed thereon, wherein the shaft core is locked when the safety belt retractor is blocked, and the disk pistons (27) are connected to the shaft body (34) via an interlocking connection (36).

5. Safety belt retractor according to one of the claims 1 to 4, **characterized in that** a plurality of disk pistons (27) and apertured disks (28) are disposed in an alternating sequence in the housing (21, 34) of the rotation dampener.

6. Safety belt retractor according to one of the claims 1 to 5, **characterized in that** a respective spacer element (30) is disposed between disk piston (27) and apertured disk (28).

7. Safety belt retractor according to one of the claims 1 to 6, **characterized in that** the housing (21, 34) is filled with silicone as highly viscous medium.

8. Safety belt retractor according to claim 7, **characterized in that** the silicone that is filled into he housing (21, 34) is already under an increased pressure prior to the activation of the force limitation.

## Revendications

1. Enrouleur de ceinture de sécurité (10), servant de système de sécurité dans les véhicules automobiles, présentant une broche de ceinture (12), logée dans un boîtier en forme de U (11), servant de support d'enroulement à la sangle de ceinture, et un amortisseur de rotation agissant sur la broche de ceinture (12) servant d'élément limiteur de tension, l'amortisseur de rotation étant composé d'un boîtier cylindrique (21) rempli d'un fluide à viscosité élevée avec au minimum un disque (28) fixé à l'intérieur et un piston à disque (27) solidaire de la broche de ceinture (12,31,34), dont la rotation doit être amortie, étant placé dans le boîtier (21) parallèlement au disque (28), **caractérisé en ce que** le disque fixé dans le boîtier (21) est un disque ajouré (28) et **en ce que** le piston à disque (27) est muni d'une ailette (16) à position radiale faisant le tour du piston à disque (27) lorsque celui-ci est en rotation.

2. Enrouleur de ceinture de sécurité selon la revendication 1, **caractérisé en ce que** le boîtier (21) est bridé latéralement au boîtier (11) de l'enrouleur de ceinture de sécurité (10) et **en ce que** le piston à disque (27) est lié à la broche de ceinture (31,34).

3. Enrouleur de ceinture de sécurité selon la revendication 2 présentant une section en torsade raccordée à la broche de ceinture agissant comme dispositif limiteur de tension, et dans lequel le piston à disque (27) est lié à la section en torsade.

4. Enrouleur de ceinture de sécurité selon la revendication 1, **caractérisé en ce que** le boîtier cylindrique est formé du corps (34) de la broche de ceinture et **en ce que** des disques ajourés (28) et des pistons à disque (27) sont placés dans le corps de la broche (34), un coeur de broche (35) bloqué en cas de grippage de l'enrouleur de ceinture de sécurité étant prévu pour servir de support aux disques ajourés installés dessus en force et les pistons à disque (27) étant accouplés au corps de la broche (34) par un raccord craboté (36).

5. Enrouleur de ceinture de sécurité selon l'une des revendications 1 à 4, **caractérisé en ce que** plusieurs pistons à disque (27) et plusieurs disques ajourés (28) sont placés selon un ordre variable dans le boîtier (21, 34) de l'amortisseur de rotation.

6. Enrouleur de ceinture de sécurité selon l'une des revendications 1 à 5, **caractérisé en ce qu'**il se trouve un élément d'écartement (30) entre chaque couple constitué d'un piston à disque (27) et d'un disque ajouré (28).

7. Enrouleur de ceinture de sécurité selon l'une des revendications 1 à 6, **caractérisé en ce que** le boîtier (21, 34) est rempli de silicone servant de fluide à viscosité élevée.

8. Enrouleur de ceinture de sécurité selon la revendication 7, **caractérisé en ce que** le silicone remplissant le boîtier (21, 34) est déjà sous pression avant l'action du limiteur de tension.
